# EUROPEAN PATENT APPLICATION

(11) **EP 3 546 380 A1**
(43) Date of publication of application: **02.10.2019**
(21) Application number: 19163983.0
(22) Date of filing: 20.03.2019
(51) Int. Cl.: B65B 43/46, B65B 43/50, B65B 65/00

(54) **BAG PROCESSING SYSTEM**

(30) Priority: 28.03.2018 JP 2018062779
(71) Applicant: Toyo Jidoki Co., Ltd., Tokyo (JP)
(72) Inventor: NAKAMOTO, Kakue, Iwakuni-shi, Yamaguchi 740-0045 (JP)
(74) Representative: Grünecker Patent- und Rechtsanwälte PartG mbB

(57) **Abstract**

A bag processing system (10) includes processing mechanisms (11), wherein each processing mechanism (11) includes: a processing device (12) which sequentially conveys bags (B) to stations including a supply station (Sl), a processing station (S2 to S7) and a discharge station (S8), a supply device (14) which conveys the bags in a supply direction (Ds) and supplying the bags to the supply station; and a discharge device (15) which receives the bags from the discharge station and conveys the bags in a discharge direction (Dd), the supply direction and the discharge direction are substantially same as each other in each of two or more of the processing mechanisms, and the supply directions of the two or more of the processing mechanisms are substantially same as each other and the discharge directions of the two or more of the processing mechanisms are substantially same as each other.

## Description

### TECHNICAL FIELD

The present invention relates to a bag processing system.

### BACKGROUND ART

A rotary type bag processing machine adopting a so-called intermittent rotation system is known as a bag processing system, such as a packaging machine for storing contents in a bag or a spout attachment machine for attaching a spout to a bag. In a typical intermittent rotation rotary bag processing machine, a plurality of gripper pairs are arranged at regular intervals around a rotation table that rotates intermittently, and while both side edge portions of a bag is held with a gripper pair, the bag is intermittently conveyed together with the gripper pair. Bags conveyed in this manner are subjected to various processes (for example, processes for opening of a bag, filling of articles to be packaged, sealing of a mouth part, etc.) at respective intermittent stop positions.

This intermittent rotation rotary bag processing machine has the following advantages.

Various treatments are performed on a bag that is stopped at the intermittent stop positions, so that various kinds of treatments can be performed reliably and stably. Further, since various treatments can be performed during the bag being stopped, there is no need to provide a mechanism for causing various devices to follow bags, so that it is possible to simplify the device structure, to make the devices compact, and to reduce the cost. In addition, the intermittent rotation rotary bag processing machine usually conveys a bag in its width direction along an arc path. Therefore, as compared with a configuration in which a bag is conveyed in its thickness direction like the intermittent conveyance multi-row type bag processing machine disclosed in Japanese examined patent application publication No. 03-29650, the intermittent rotation rotary bag processing machine can suppress the shaking of a bag caused by conveyance and can prevent concerns caused by the shaking of the bag (for example, prevent a liquid from jumping out of a bag, prevent such a liquid from adhering to an intended sealing portion of the inner surface of the mouth portion of a bag, and prevent air from flowing into a bag after degassing).

Further, in the intermittent rotation rotary bag processing machine, devices for performing various kinds of processing can be arranged around the rotation table, and thus parts replacement, adjustment and the like necessitated by change of bags or the like, can be easily carried out, and the versatility is high, and the maintenance, etc. can be easily carried out. On the other hand, in the intermittent conveyance multi-row type bag processing machine, it is necessary to dispose devices for performing various kinds of processing also in the vicinity of the central part of the processing machine, and it is not easy to carry out parts replacement, adjustment and maintenance necessitated by changing bags and the like. Furthermore, in the intermittent rotation rotary bag processing machine, the conveyance path of a bag draws an arc which is close to a circle, and thus there are almost no useless path, such as a return section (see a return section of the chain conveyor disclosed in Japanese examined patent application publication No. 03-29650) seen in the intermittent conveyance multi-row type bag processing machine, and the processing can be performed efficiently in a limited space.

### SUMMARY OF INVENTION

### Technical Problem

In order to perform bag processing on a large number of bags or to perform plural kinds of bag processing, it is possible to arrange a plurality of intermittent rotation rotary bag processing machines side by side in one space (for example, a work room in a factory). However, when a plurality of intermittent rotation rotary bag processing machines are arranged side by side, there are the following concerns.

In an intermittent rotation rotary bag processing machine, it is general that a station for supplying a bag to the processing machine side and a station for discharging a processed bag outside the processing machine are provided at positions adjacent to each other. As the number of processing steps in the bag processing machine increases, the diameter of the rotation table increases and the apparatus itself increases in size. Therefore, in reality, the configuration of the bag processing machine is adaptively determined according to the number of necessary processing steps, and, for example, the diameter of the rotation table, the number of stations and the number of grippers are determined according to the number of necessary processing steps. When the apparatus is designed so as not to create a useless step in this manner, in general, the station where the bag supply process is performed and the station where the bag discharge process is performed are provided at positions adjacent to each other.

When the station where the bag supply process is performed and the station where the bag discharge process is performed are provided in adjacent positions in the rotary type bag processing machine, the supply direction of bags in the bag supply process and the discharge direction of bags in the bag discharge process are different from each other. Specifically, in general, the supply direction and the discharge direction are set so as to be parallel to the diameter direction with reference to the rotation center of the rotation table. Thus, in a rotary type bag processing machine provided with three or more stations, the supply direction and the discharge direction of bags are non-parallel to each other. For example, in a case where eight stations are provided, the angle between adjacent stations is 45° with reference to the rotation center of the rotation table, and therefore the supply direction and the discharge direction of bags are also generally shifted by about 45°.

In a case where a plurality of rotary type bag processing machines in which the bag supply direction and the bag discharge direction are oriented in mutually different directions are arranged side by side, problems may arise in the installation space and the flow line of the worker.

Normally, installation of the apparatus is determined in such a manner that the necessary treatments can be smoothly performed in order and that the conveyance distance and the processing time of a bag can be shortened. When only one rotary type bag processing machine is installed, the influence based on the bag supply direction and the bag discharge direction on the installation space and the flow line is relatively small. However, in a case where two or more rotary type bag processing machines are provided, the influence based on the bag supply direction and the bag discharge direction on the installation space and the flow line between the processing machines is relatively large, and it is sometimes difficult to secure a flow line having a sufficient size while the necessary processing machines are installed in a limited space. For example, in order to secure a flow line having a sufficient size, it is conceivable to increase the interval between adjacent rotary type bag processing machines, but in such a case, a large installation space is required and it is expected that installation of the apparatus itself might be difficult. Furthermore, in order to compensate for the shortage of the flow line space, it is conceivable that specific workers are allocated to the respective rotary type bag processing machines, but in such a case, personnel expenses increase, resulting in an increase in cost in total.

The present invention has been made in view of the above circumstances, and it is an object thereof to provide a bag processing system enabling a plurality of processing mechanisms to be installed in a space efficient manner. Another object of the present invention is to provide a bag processing system capable of efficiently processing bags with a limited number of workers.

### Solution to Problem

One aspect of the present invention is directed to a bag processing system comprising a plurality of processing mechanisms, wherein: each of the plurality of processing mechanisms includes: a processing device which sequentially conveys bags to a plurality of stations including a supply station, a processing station and a discharge station, a supply device which conveys the bags in a supply direction and supplying the bags to the supply station; and a discharge device which receives the bags from the discharge station and conveys the bags in a discharge direction, the supply direction and the discharge direction are substantially the same as each other in each of two or more of the plurality of processing mechanisms, and the supply directions of the two or more of the plurality of processing mechanisms are substantially the same as each other and the discharge directions of the two or more of the plurality of processing mechanisms are substantially the same as each other.

The supply station and the discharge station may be provided adjacent to each other with respect to arrangement positions of the plurality of stations.

The plurality of processing mechanisms may include: a first type processing mechanism in which the processing device conveys the bags in a first rotation direction, and a second type processing mechanism in which the processing device conveys the bags in a second rotation direction different from the first rotation direction and which is provided at a position adjacent to the first type processing mechanism.

The processing device of each processing mechanism may include: a rotation table which rotates about a rotation axis; and a plurality of holding units which are attached to the rotation table and hold the bags, the supply device of each processing mechanism includes a supply conveyance unit which conveys the bags on a supply conveyance path in the supply direction, the discharge device includes a discharge conveyance unit which conveys the bags on a discharge conveyance path in the discharge direction, a supply conveyance center line which extends in parallel with the supply direction and passes through a center of the supply conveyance path in a whole of the supply conveyance unit does not intersect with the rotation axis, and a discharge conveyance center line which extends in parallel with the discharge direction and passes through a center of the discharge conveyance path in a whole of the discharge conveyance unit does not intersect with the rotation axis.

The supply device of each processing mechanism may include: a supply conveyance unit which conveys the bags in the supply direction, an arrangement adjustment unit which adjusts arrangement of the bags conveyed from the supply conveyance unit, and a delivery device which transfers the bags of which the arrangement has been adjusted by the arrangement adjustment unit, to the supply station.

The bag processing system may further comprise a stocker which holds a plurality of bags to be supplied to the supply device of each processing mechanism, and the stocker may include: a body portion which is provided movably, a housing portion which is supported by the body portion, and a support member which supports a bag bundle including two or more bags in the housing portion.

According to the present invention, it is possible to install a plurality of processing mechanisms in a space efficient manner. Further, according to the present invention, it is possible to efficiently process bags with a limited number of workers.

### BRIEF DESCRIPTION OF DRAWINGS

Fig. 1 is a plan view illustrating a processing mechanism according to one embodiment of the present invention.
Fig. 2 is a plan view of a bag processing system including a plurality (specifically, three) of the processing mechanisms illustrated in Fig. 1.
Fig. 3 is a plan view of a conventional bag processing system.
Fig. 4 is a plan view illustrating a bag processing system and processing mechanisms (a first type processing mechanism and a second type processing mechanism) according to a second embodiment, showing a bag processing system in which two processing mechanisms are provided.
Fig. 5 is a plan view illustrating a bag processing system and processing mechanisms (a first type processing mechanism and a second type processing mechanism) according to the second embodiment, showing a bag processing system in which three processing mechanisms are provided.
Fig. 6 is a plan view illustrating a bag processing system and processing mechanisms according to a third embodiment.
Fig. 7 is a plan view illustrating a bag processing system and processing mechanisms according to a fourth embodiment.

### DESCRIPTION OF EMBODIMENTS

Some embodiments of the present invention will be described with reference to the drawings.

### [First Embodiment]

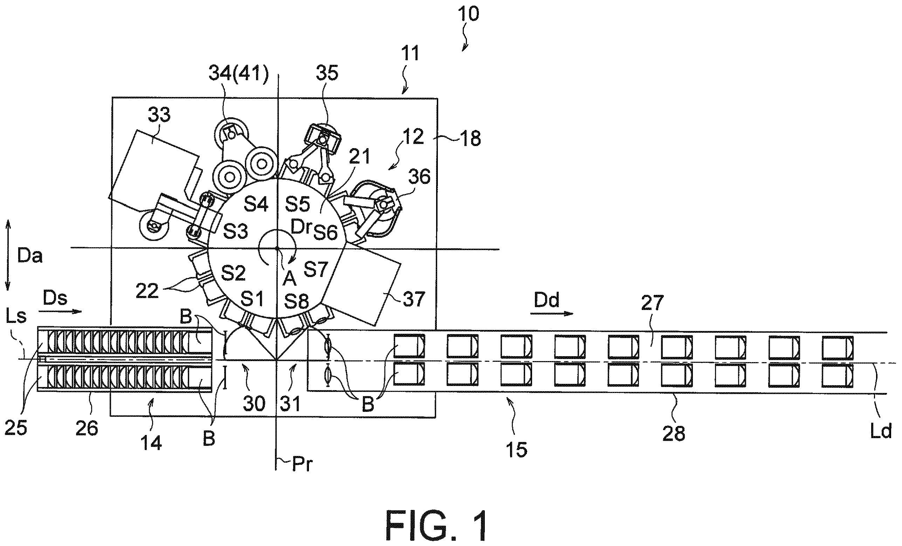

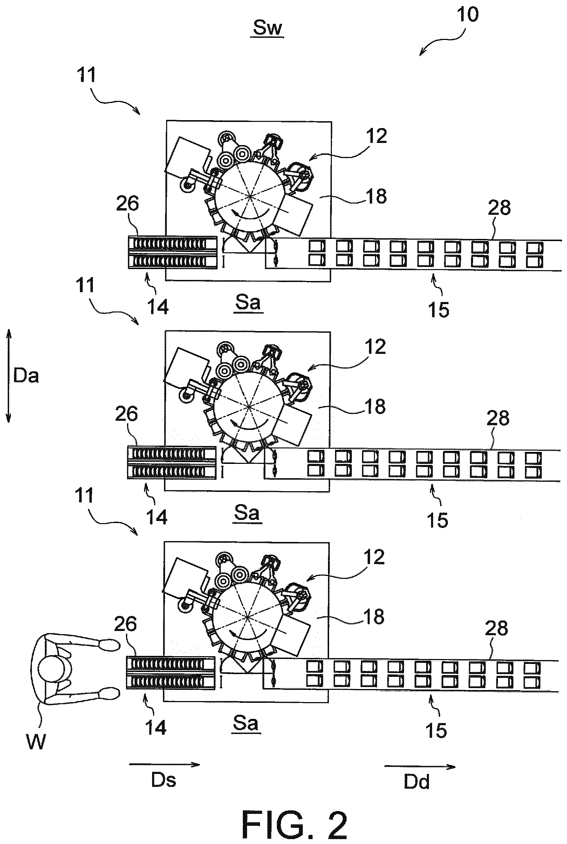

Fig. 1 is a plan view illustrating a processing mechanism 11 according to one embodiment of the present invention. Fig. 2 is a plan view of a bag processing system 10 including a plurality (specifically, three) of the processing mechanisms 11 illustrated in Fig. 1.

Each processing mechanism 11 includes a processing device 12, a supply device 14, and a discharge device 15 as shown in Fig. 1. The processing device 12 performs various processes on bags B while sequentially conveying the bags B to a plurality of stations S1 to S8. The supply device 14 conveys bags B in the supply direction Ds and supplies the bags B to the supply station (the first station S1 shown in Fig. 1). The discharge device 15 receives bags B from the discharge station (the eighth station S8 shown in Fig. 1) and conveys the bags B in the discharge direction Dd. The supply station (first station S1) and the discharge station (eighth station S8) are provided at positions adjacent to each other with respect to the arrangement positions of the plurality of stations S1 to S8. Assuming a reference plane Pr which is orthogonal to each of the supply direction Ds and the discharge direction Dd and intersects with the rotation axis A as shown in Fig. 1, the position (i.e., bag supply position) where a bag B is supplied from the supply device 14 to the first station S1 is located on one side with respect to the reference plane Pr, and the position (i.e., bag discharge position) where a bag B is discharged from the eighth station S8 to the discharge device 15 is located on the other side with respect to the reference plane Pr.

The plurality of stations S1 to S8 include one or more processing stations where a process is applied to a bag B, in addition to the above-described supply station (first station S1) and discharge station (eighth station S8). In the processing device 12 shown in Fig. 1, an opening device 33 performs a process of opening the mouth portion of a bag B at the third station S3, a solid material injection device 34 performs a process of injecting a solid material to the inside of a bag B at the fourth station S4, a liquid injection device 35 performs a process of injecting a liquid to the inside of a bag B at the fifth station S5, a deaeration device 36 performs a process of deaerating the inside of a bag B at the sixth station S6, and a sealing device 37 performs a process of sealing the mouth portion of a bag B at the seventh station S7. As just described, in the illustrated processing device 12, the third station S3 to the seventh station S7 function as substantial processing stations. Although the illustrated second station S2 is an empty station at which no particular processing is performed, processing for a bag B or the like may be performed at the second station S2.

Although the processing mechanism 11 shown in Fig. 1 is provided with eight stations, the number of stations is not limited and, for example, 10 stations (the first station to the tenth station) may be provided in each processing mechanism 11. In such a case, for example, it is possible to use the first station S1 for the supply station and the tenth station S10 for the discharge station.

The supply device 14 includes a supply conveyance unit 26 and a delivery device 30. The supply conveyance unit 26 conveys bags B in the supply direction Ds on a supply conveyance path 25. The delivery device 30 receives bags B from the supply conveyance unit 26 and transfers the bags B to the first station S1 (supply station).

The supply conveyance unit 26 has magazines extending in the supply direction Ds, a large number of bags B are stored in each magazine, and each magazine is configured in such a manner that the bags B stored in the magazine are gradually moved in the supply direction Ds toward the delivery device 30. The illustrated supply conveyance unit 26 has a plurality (specifically, two) of magazines arranged side by side in an apposition direction Da perpendicular to the supply direction Ds, and each magazine forms a supply conveyance path 25 which extends in the supply direction Ds. In this manner, many bags B stored in each magazine are stacked on each other in the direction parallel to the supply direction Ds. Thus, when it is required to store more bags B in each magazine, it is only necessary to expand each magazine in the direction parallel to the supply direction Ds. In this case, the occupied area of a magazine increases in the direction parallel to the supply direction Ds, but does not increase in the apposition direction Da perpendicular to the supply direction Ds. Therefore, the number of bags B storable in a magazine can be increased without substantially affecting another processing mechanism 11 arranged adjacently in the apposition direction Da. The method of replenishing bags B in the magazines (namely, in the supply conveyance path 25 of the supply conveyance unit 26) is not limited, and bags B may be supplied into the magazines by a worker W or may be supplied into the magazines by a device which is not illustrated.

The delivery device 30 adjusts the positions and orientations of bags B received from the supply conveyance unit 26, and then delivers the bags B to holding units 22 disposed in the first station S1. The illustrated delivery device 30 receives two bags B at a time from the supply conveyance unit 26 (magazines) and adjusts the positions and orientations of these bags B at the same time. The delivery device 30 may have any mechanism capable of changing the positions and orientations of bags B in such a manner that holding units 22 arranged at the first station S1 can properly hold the bags B. It is possible to use a mechanism to which the mechanism disclosed in Japanese patent apposition publication No. 2009-29446 or Japanese registered utility model No. 3123709 for example is applied, as such a mechanism for adjusting the positions and orientations of bags B.

The processing device 12 includes: a rotation table 21 which is installed on a stand 18 and rotates in a rotation direction Dr about a rotation axis A; and a plurality of holding units 22 which are attached to the rotation table 21 and are provided for holding bags B. The rotation table 21 has a circular planar shape, and the plurality of holding units 22 are provided fixedly with respect to the outer peripheral portion of the rotation table 21. The plurality of holding units 22 are classified into a plurality of groups, the number of these groups is the same as the number of stations, and in the illustrated example, eight groups of holding units 22 are provided at equal intervals in the circumferential direction of the rotation table 21. In the illustrated processing device 12, each holding unit 22 includes a gripper pair, and each group includes two holding units 22 (namely, two gripper pairs). Each gripper pair includes two grippers and is configured to be able to grip both side edge portions of a corresponding bag B. As the rotation table 21 rotates, bags B sequentially pass through the first station S1 to the eighth station S8 together with the gripper pairs. Each gripper shifts from an open state to a closed state at the first station S1 so as to grip a bag B supplied from the delivery device 30. Further, in the second station S2 to the seventh station S7, each gripper maintains the closed state so as to keep holding a bag B. Then, at the eighth station S8, each gripper shifts from the closed state to an open state so as to release and deliver a bag B to a take-out device 31. The opening and closing operation of each gripper may be performed under the control of a controller (not shown) or may be performed based on a mechanical mechanism.

The rotation table 21 is intermittently rotated by a motor drive under the control of a controller (not shown). More specifically, the rotation table 21 is intermittently rotated in such a manner that the holding units 22 attached to the rotation table 21 intermittently stops at each of the first station S1 to the eighth station S8. An apparatus provided in each station performs processing on a bag B placed in the corresponding station while the rotation table 21 is intermittently stopped. In the illustrated processing device 12, the mouth potion of a bag B is opened at the third station S3, a solid material is introduced into the inside of a bag B at the fourth station S4, and a liquid is introduced into the inside of a bag B at the fifth station S5, deaeration of the inside of a bag B is performed at the sixth station S6, the mouth of a bag B is sealed at the seventh station S7 in such a manner that the bag B is hermetically sealed.

The rotation table 21 may be continuously rotated without intermittently stopping. In this case, the processing device 12 performs predetermined processes on a bag B continuously moving in a state where the bag B is held by a holding unit 22. A device provided in each station may follow a bag B as necessary in such a manner that the bag B moving continuously can be properly subjected to processing.

The apparatuses that perform various processes in the processing stations are not limited, and may have any configuration. For example, the deaeration device 36 may have nozzles for blowing steam to the inside of bags B arranged at the sixth station S6 in such a manner that deaeration inside the bags B can be carried out by utilizing the volume change when the temperature of the steam has been supplied into the bags B becomes room temperature to turn into a liquid (for example, water). Further, the sealing device 37 can seal the mouth portion of a bag B by means of, for example, ultrasonic welding (ultrasonic sealing), and can also seal the mouth portion of a bag B by another method (for example, heat welding (heat sealing)). In a case where the sealing device 37 employs a heat seal, cooling of the sealed portion of a bag B may be required in a later stage, but in a case where the sealing device 37 employs the ultrasonic seal, such a cooling step is unnecessary.

The processes performed in the processing stations shown in Fig. 1 are merely an example, and processes that can be performed in the processing stations are not limited. For example, the solid material injection process and/or the liquid injection process may not be performed, a solid material injection and a liquid injection may be performed in one station, or processes for supplying other objects (for example, a gel-like material or a gas) to the inside of bags B may be performed. Further, the mouth opening process, the deaeration process and/or the sealing process may not be performed, and other processes may be performed at the processing stations.

While the processing mechanism 11 and the processing device 12 shown in the drawings perform a process of introducing contents into bags B, in addition to or in place of this, a process of attaching an instrument such as a spout to each bag B, for example, may be performed by the processing mechanism 11 and the processing device 12. In such a case, for example, the processing stations may include one or more stations provided for performing a process of arranging a bag B and an instrument in positions which are close to each other and attaching a corresponding instrument to each bag B, devices required for such a process may be installed in one or more corresponding stations. As one example, the mouth portion of a bag B may be opened by the opening device 33 in the third station S3, and an instrument (spout or the like) may be attached to the mouth portion of a bag B by an attaching device 41 in the fourth station S4.

The discharge device 15 includes the take-out device 31 and a discharge conveyance unit 28. The take-out device 31 receives bags B from the processing device 12 (holding units 22 positioned in the eighth station S8) and transfers the bags B to the discharge conveyance unit 28. The discharge conveyance unit 28 conveys in the discharge direction Dd bags B received from the take-out device 31 and placed on a discharge conveyance path 27 and sends out the bags B toward the subsequent stage.

The take-out device 31 adjusts the positions and orientations of bags B received from the holding units 22 arranged at the eighth station S8, and thereafter releases the bags B above the discharge conveyance path 27 configured by the discharge conveyance unit 28 of the discharge device 15. As a result, the bags B are placed on the discharge conveyance path 27. The illustrated take-out device 31 receives two bags B at one time from the holding units 22 arranged in the eighth station S8 and adjusts the positions and orientations of these bags B at the same time. The take-out device 31 may have any mechanism capable of changing the attitude of bags B so as to have positions and orientations such that the bags B can be properly placed on the discharge conveyance path 27. For example, the take-out device 31 may have a holding mechanism (for example, a movable chuck member which can grip the mouth portion of a bag B) that does not interfere with a holding unit 22 gripping both side edge portions of the bag B. For example, it is possible to use a mechanism to which the mechanism disclosed in Japanese patent application publication No. 2012-12041 is applied, as a mechanism which adjusts the positions and orientations of bags B and which the take-out device 31 comprises.

The discharge device 15 shown in the drawings is constituted by a belt conveyor, the discharge conveyance path 27 is constituted by a belt provided so as to be able to travel in the discharge direction Dd, and bags B placed on the discharge conveyance path 27 are conveyed in the discharge direction Dd along with the running of the belt. Bags B discharged from the processing device 12 to the discharge device 15 are basically bags which have been processed in the processing device 12, and in the illustrated example, product bags each of which a solid and a liquid have been enclosed in are sent from the processing device 12 to the discharge device 15.

In each processing mechanism 11 having the above-described configuration, the supply direction Ds and the discharge direction Dd are substantially the same as each other. Also, between two or more processing mechanisms 11, the supply directions Ds are substantially the same as each other and the discharge directions Dd are substantially the same as each other. In particular, the supply direction Ds and the discharge direction Dd are substantially parallel to each other, and the supply direction Ds and the discharge direction Dd are perpendicular to the apposition direction Da. Thus, it is possible to prevent the supply device 14 and the discharge device 15 from becoming long in the apposition direction Da, and it is possible to suppress an increase in the size of each processing mechanism 11 in the apposition direction Da. In particular, by setting each of the supply direction Ds and the discharge direction Dd to a direction perpendicular to the apposition direction Da, it is possible to utilize the region between the processing mechanisms 11 in the apposition direction Da as the flow line space Sa. Therefore, even if the size of the work room Sw in which the bag processing system 10 may be installed is limited, it becomes possible to secure the flow line space Sa having a necessary and sufficient size between the processing mechanisms 11, and the flow line space Sa can be utilized as a work space for maintenance and inspection of the processing mechanisms 11.

In the bag processing system 10 shown in Fig. 2, with respect to each of all the processing mechanisms 11, the supply device 14 and the discharge device 15 are arranged in such a manner that the supply direction Ds and the discharge direction Dd are substantially parallel to each other in the horizontal plane (in particular, in such a manner that the supply direction Ds and the discharge direction Dd coincide with each other). Further, in the example shown in Fig. 2, the supply direction Ds and the discharge direction Dd are provided to be substantially the same in all of the three processing mechanisms 11 included in the bag processing system 10, and are provided to be a direction perpendicular to the apposition direction Da (to be the right direction in Fig. 2).

The supply directions Ds being substantially the same as each other, the discharge directions Dd being substantially the same as each other, and the supply direction Ds and the discharge direction Dd being substantially the same as each other do not necessarily require the strictly same direction, and it is sufficient for two directions of the comparison objects to be approximately the same as each other. Also, the supply direction Ds and the discharge direction Dd being substantially parallel to each other do not necessarily require the exact parallelism, and it is sufficient for the supply direction Ds and the discharge direction Dd to be approximately parallel to each other. In a case where the supply direction Ds and the discharge direction Dd are substantially the same as each other or in a case where the supply direction Ds and the discharge direction Dd are substantially parallel to each other, a bag B conveyed in the supply direction Ds and a bag B conveyed in the discharge direction Dd may be moved on the same straight line or may be moved respectively on two straight lines which do not coincide with each other. Thus, in each processing mechanism 11, the supply direction Ds and the discharge direction Dd may be shifted from each other in the apposition direction Da.

In each of the processing mechanisms 11, the part of the supply device 14 which conveys bags B in the supply direction Ds (i.e., the supply conveyance path 25 of the supply conveyance unit 26) and the part of the discharge device 15 which conveys bags B in the discharge direction Dd (i.e., the discharge conveyance path 27 of the discharge conveyance unit 28) are at least partly opposed to each other in terms of the supply direction Ds and the discharge direction Dd. In other words, the image obtained when the supply conveyance path 25 is projected in the supply direction Ds and the discharge direction Dd, and the image obtained when the discharge conveyance path 27 is projected in the supply direction Ds and the discharge direction Dd, are partially or totally superimposed on each other. This makes it possible to more effectively suppress an increase in the size of each processing mechanism 11 in the apposition direction Da.

In particular, in the processing mechanism 11 shown in Fig. 1, the supply conveyance center line Ls extending in parallel with the supply direction Ds and passing through the center of the supply conveyance path 25 in the entire supply conveyance unit 26 coincides with (i.e., is superimposed on) the discharge conveyance center line Ld extending in parallel with the discharge direction Dd and passing through the center of the discharge conveyance path 27 in the entire discharge conveyance unit 28. As a result, it is possible to suppress the positional deviation in the apposition direction Da between the supply device 14 (in particular, the supply conveyance path 25) and the discharge device 15 (in particular, the discharge conveyance path 27), and increase in the size of ea ch of the processing mechanisms 11 in the apposition direction Da can be suppressed.

When the processing performance of the processing device 12 improves and the number of bags B that can be processed per unit time increases, in some cases, it is requested to increase the number of bags B stored in the supply conveyance unit 26 or to increase the number of bags B conveyed by the discharge conveyance unit 28. In such a case, according to the processing mechanism 11 and the bag processing system 10 according to the present embodiment, it is possible to meet such demands by expanding the supply conveyance unit 26 (the supply conveyance path 25) in the supply direction Ds perpendicular to the apposition direction Da or by expanding the discharge conveyance unit 28 (discharge conveyance path 27) in the discharge direction Dd perpendicular to the apposition direction Da. Specifically, it is not necessarily required to expand the supply conveyance path 25 and the discharge conveyance path 27 in the apposition direction Da. In this way, while the enlargement of each processing mechanism 11 in the apposition direction Da is prevented, the request of increase in the number of bags B stored in the supply conveyance unit 26 and the request of increase in the number of bags B conveyed by the discharge conveyance unit 28 can be addressed.

Further, as shown in Fig. 2, by arranging the respective supply devices 14 of the plurality of processing mechanisms 11 on the same side (the left side in Fig. 2) with reference to the corresponding processing devices 12, the work for each supply device 14 (for example, replenishing operation of bags B) can be facilitated. In particular, in each of the supply devices 14, a part to which bags B are supplied (in Fig. 2, the left end portion of each supply conveyance unit 26) and a part in which other work is carried out are preferably located in positions projecting from the stand 18 in a direction parallel to the supply direction Ds and the discharge direction Dd. In this case, the worker W can perform work without entering the flow line space Sa between the processing mechanisms 11.

Further, in each processing mechanism 11 shown in Figs. 1 and 2, the supply device 14 (in particular, the supply conveyance unit 26) and the discharge device 15 (in particular, the discharge conveyance unit 28) are provided so as not to protrude from the stand 18 in the apposition direction Da. As a result, it is possible to efficiently use the space between the processing mechanisms 11 for the flow line space Sa, and a region which is necessary and sufficient for the flow line can be secured for the flow line space Sa while the distance between the processing mechanisms 11 can be shortened in the apposition direction Da.

In the example shown in Fig. 2, a plurality of processing mechanisms 11 having the same apparatus configuration are arranged, but the bag processing system 10 may include two or more processing mechanisms 11 having apparatus configurations different from each other. For example, the kinds of performed processing and the installed apparatuses in the second station S2 to the seventh station S7 may be different between the processing mechanisms 11. However, even in such a case, the supply direction Ds and the discharge direction Dd are preferably common among the processing mechanisms 11, and the supply direction Ds and the discharge direction Dd in each processing mechanism 11 are preferably perpendicular to the apposition direction Da.

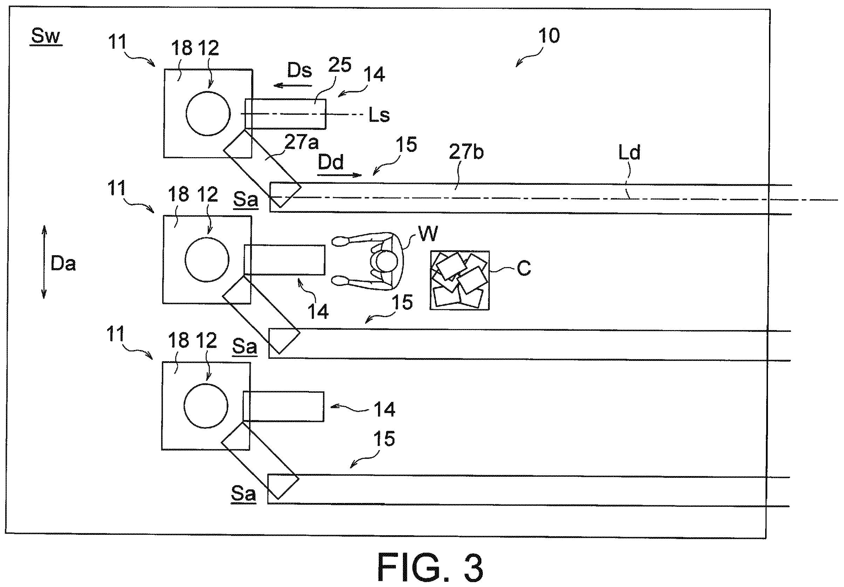

Fig. 3 is a plan view of a conventional bag processing system 10. In each processing mechanism 11 of the bag processing system 10 shown in Fig. 3, the supply direction Ds and the discharge direction Dd are different from each other. Further, the part of the supply device 14 which conveys bags B in the supply direction Ds perpendicular to the apposition direction Da and the part of the discharge device 15 which conveys bags B in the discharge direction Dd perpendicular to the apposition direction Da, are not opposed to each other in the supply direction Ds and the discharge direction Dd. Thus, the supply device 14 and the discharge device 15 are provided at positions relatively separated from each other in the apposition direction Da, and the size of each processing mechanism 11 in the apposition direction Da is increased. Therefore, when the size of the work room Sw in which the bag processing system 10 is to be installed is limited, it is sometimes impossible to secure a flow line space Sa having a sufficient size between the processing mechanisms 11. Further, in order to secure a flow line space Sa having a sufficient size between the processing mechanisms 11, it is necessary to enlarge the work room Sw in which the bag processing system 10 is installed, and the place where the bag processing system 10 can be installed is limited.

Further, as shown in Fig. 3, in a case where a discharge device 15 is disposed between the respective supply devices 14 of the two processing mechanisms 11 arranged next to each other, the flow line between the supply devices 14 is cut off by the discharge device 15. Thus, the worker W cannot move back and forth between the supply devices 14 at the shortest distance. For example, in a case where bags B are supplied to each of the supply devices 14 of the two processing mechanisms 11 by one worker W, according to the bag processing system 10 shown in Fig. 3, the worker W have to go around the discharge device 15 to move between the supply devices 14. Further, when a large number of bags B are stocked in a case C and the worker W takes out bags B from the case C and supplies them to the supply devices 14, the movement distance of the case C may become long, or a mechanism for transporting the case C across the discharge device 15 may be required.

The supply devices 14 shown in Fig. 3 each have a supply conveyance path 25 extending linearly. Thus, when the number of bags B stored in the supply device 14 is increased, it is only necessary to expand the supply conveyance path 25 in parallel with the supply direction Ds, and there is no need to expand the supply conveyance path 25 in the apposition direction Da. On the other hand, the discharge devices 15 shown in Fig. 3 each include not only a discharge conveyance path 27b extending only in the discharge direction Dd but also a discharge conveyance path 27a extending in a direction inclined with respect to the apposition direction Da. Thus, when it is necessary to expand the discharge conveyance path 27a in order to increase the number of bags B conveyed by each discharge device 15, the size of each processing mechanism 11 in the apposition direction Da is increased. The supply devices 14 may be disposed at the positions of the discharge devices 15 shown in Fig. 3, and the discharge devices 15 may be disposed at the positions of the supply devices 14 shown in Fig. 3. In this case, however, if it is necessary to expand the supply devices 14 in the apposition direction Da in order to increase the number of bags B stored in the supply devices 14, the size of each processing mechanism 11 in the apposition direction Da is increased. When the size of each processing mechanism 11 in the apposition direction Da is increased, the installation space of the bag processing system 10 as a whole may be increased, and the interval between the processing mechanisms 11 may be further reduced.

As described above, according to the bag processing system 10 and the processing mechanism 11 of the present embodiment shown in Figs. 1 and 2, it is possible to suppress an increase in the size of the processing mechanism 11 with respect to the apposition direction Da. Further, in a case where a plurality of processing mechanisms 11 are arranged side by side in the apposition direction Da, it is possible to arrange the respective supply conveyance paths 25 of the plurality of processing mechanisms 11 at positions relatively close to each other with respect to the apposition direction Da. Thus, the bag processing system 10 can be made compact, and a plurality of processing mechanisms 11 can be operated with a small number of workers W. Further, even if it is necessary to expand the supply conveyance path 25 (magazine) due to increase in the number of bags B stocked in the supply conveyance path 25 of the supply conveyance unit 26, it is not necessary to change the distance between the processing mechanisms 11.

Further, the supply conveyance path 25 of the supply conveyance unit 26 and the discharge conveyance path 27 of the discharge conveyance unit 28 are disposed at positions opposed to each other via the reference plane Pr, and the stations in which the other steps (for example, a step of opening a bag B, a step of introducing a solid, a step of introducing a liquid, and a step of deaerating a bag B, etc.) is performed are arranged on one side with reference to the supply conveyance path 25 and the discharge conveyance path 27. In the stations where the other steps are carried out, a device that needs adjustment when bags to be processed are changed may be installed. The worker W can relatively easily adjust such a device arranged in the other stations without being disturbed by the supply conveyance path 25 and the discharge conveyance path 27. Generally, the frequency of adjustment of the supply conveyance unit 26 and the discharge conveyance unit 28 is not high.

### [Second Embodiment]

In the present embodiment, the elements which are the same as or similar to those of the above-described first embodiment are attached to the same reference numerals as those of the corresponding elements of the first embodiment, and a detailed description thereof will be omitted. A bag processing system 10 and a processing mechanism 11 according to the present embodiment can be also applied to other embodiments.

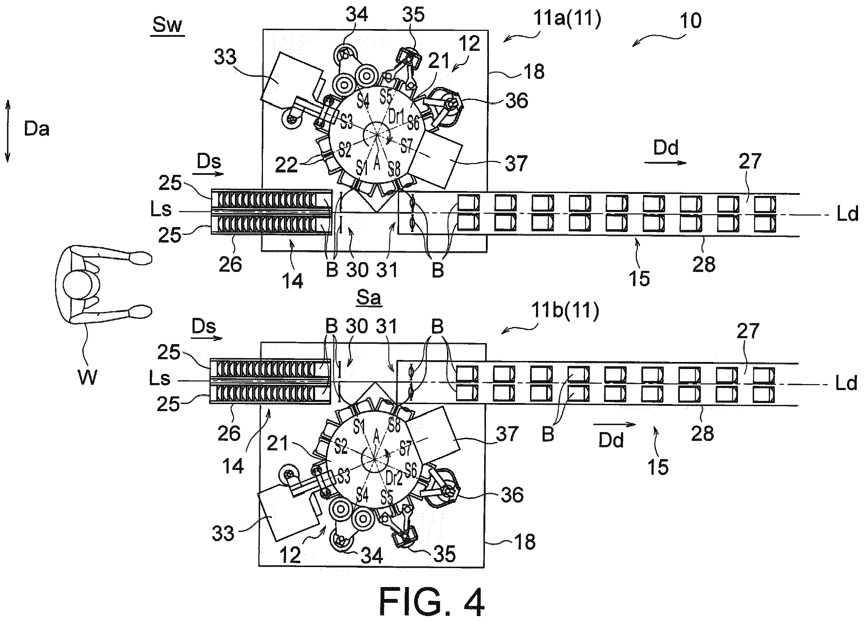

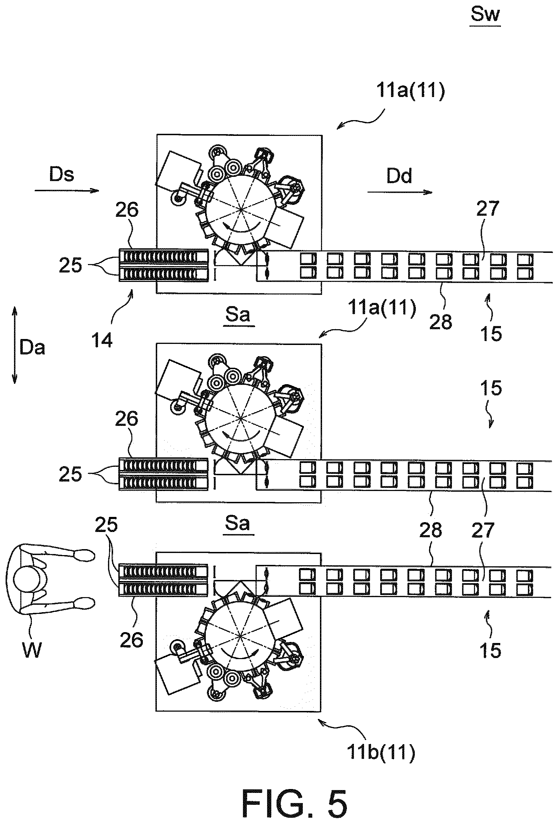

Figs. 4 and 5 are plan views illustrating bag processing systems 10 and processing mechanisms 11 (a first type processing mechanism 11a and a second type processing mechanism 11b) according to the second embodiment, Fig. 4 shows a bag processing system 10 in which two processing mechanisms 11 are provided, and Fig. 5 shows a bag processing system 10 in which three processing mechanisms 11 are provided.

The plurality of processing mechanisms 11 included in the bag processing system 10 according to the present embodiment comprise: a first type processing mechanism 11a in which the processing device 12 conveys bags B in the first rotation direction Dr1; and a second type processing mechanism 11b in which the processing device 12 conveys bags B in the second rotation direction Dr2 which is different from the first rotation direction Dr1. The second type processing mechanism 11b is provided at a position adjacent to the first type processing mechanism 11a in the apposition direction Da.

According to the present embodiment, the supply device 14 (in particular, the supply conveyance unit 26) of the first type processing mechanism 11a and the supply device 14 (in particular, the supply conveyance unit 26) of the second type processing mechanism 11b can be arranged at positions adjacent to each other across the flow line space Sa. Likewise, the discharge device 15 (in particular, the discharge conveyance unit 28) of the first type processing mechanism 11a and the discharge device 15 (in particular, the discharge conveyance unit 28) of the second type processing mechanism 11b can be arranged at positions adjacent to each other across the flow line space Sa. In Figs. 4 and 5, while the supply conveyance unit 26 and the discharge conveyance unit 28 of the first type processing mechanism 11a are disposed on the lower side of the first type processing mechanism 11a on the paper surface, the supply conveyance unit 26 and the discharge conveyance unit 28 of the second type processing mechanism 11b are disposed on the upper side of the second type processing mechanism 11b on the paper surface.

By shortening the distance between the supply conveyance unit 26 of the first type processing mechanism 11a and the supply conveyance unit 26 of the second type processing mechanism 11b in this way, the work on the supply conveyance units 26, such as bag replenishment, can be facilitated, and the burden on the worker W can be reduced. Similarly, by shortening the distance between the discharge conveyance unit 28 of the first type processing mechanism 11a and the discharge conveyance unit 28 of the second type processing mechanism 11b, the work on the discharge conveyance units 28 can be facilitated, and the burden on the worker W can be reduced.

Further, the flow line space Sa provided between the first type processing mechanism 11a and the second type processing mechanism 11b can be shared between the first type processing mechanism 11a and the second type processing mechanism 11b. Thus, it is unnecessary to secure separate flow line spaces Sa respectively for the first type processing mechanism 11a and the second type processing mechanism 11b which are arranged adjacently, and the size of the entire bag processing system 10 in the apposition direction Da can be reduced.

In the bag processing system 10 according to the present embodiment, as shown in Fig. 4, the supply conveyance center line Ls extending in parallel to the supply direction Ds and passing through the center of the supply conveyance path 25 in the entire supply conveyance unit 26 does not intersect with the rotation axis A. Further, the discharge conveyance center line Ld extending in parallel with the discharge direction Dd and passing through the center of the discharge conveyance path 27 in the entire discharge conveyance unit 28 does not intersect with the rotation axis A. In this case, with respect to the apposition direction Da, the supply conveyance path 25 and the discharge conveyance path 27 are disposed at positions which are shifted from the center of the rotation table 21 (that is, the rotation axis A). This provides the advantage that the distance between the supply conveyance path 25 of the first type processing mechanism 11a and the supply conveyance path 25 of the second type processing mechanism 11b can be shortened, and the advantage that the distance between the discharge conveyance path 27 of the first type processing mechanism 11a and the discharge conveyance path 27 of the second type processing mechanism 11b can be shortened. In this way, from the viewpoint of shortening the distance between the supply conveyance paths 25, it is preferable to dispose each supply conveyance path 25 at a position further away from the center of the rotation table 21 (that is, the rotation axis A) with respect to the apposition direction Da. Similarly, from the viewpoint of shortening the distance between the discharge conveyance paths 27, it is preferable to dispose each discharge conveyance path 27 at a position further away from the center of the rotation table 21 (that is, the rotation axis A) with respect to the apposition direction Da.

### [Third Embodiment]

In the present embodiment, the elements which are the same as or similar to those of the above-described second embodiment are attached to the same reference numerals as those of the corresponding elements of the second embodiment, and a detailed description thereof will be omitted. A bag processing system 10 and a processing mechanism 11 according to the present embodiment can be also applied to other embodiments (for example, the above-described first embodiment and a fourth embodiment described later).

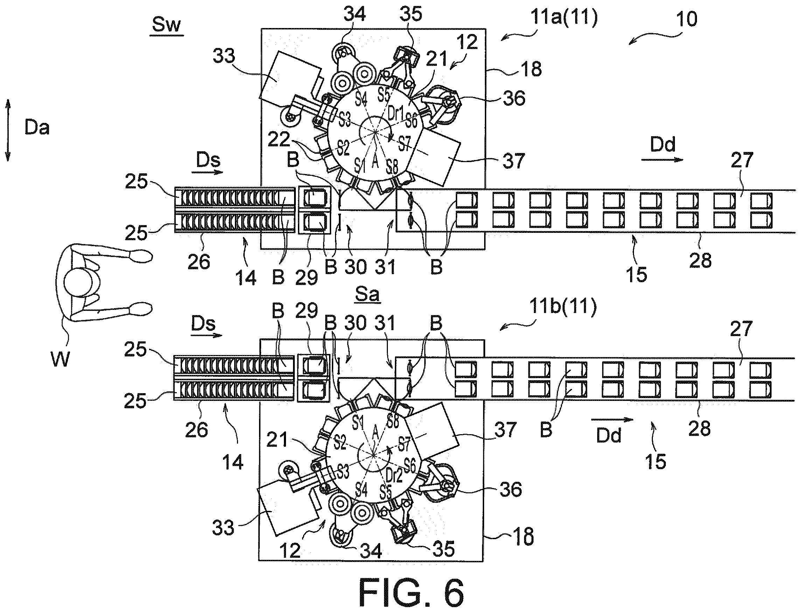

Fig. 6 is a plan view illustrating a bag processing system 10 and processing mechanisms 11 according to the third embodiment.

Each supply device 14 of the present embodiment includes a supply conveyance unit 26 that conveys bags B in the supply direction Ds, an arrangement adjustment unit 29 that adjusts the arrangement of bags B conveyed from the supply conveyance unit 26, and a delivery device 30 which transfers bags B which have been adjusted by the arrangement adjustment unit 29 to the supply station (first station S1). By providing the arrangement adjustment unit 29 between the supply conveyance unit 26 and the delivery device 30 in this way, even if the position and orientation of bags B conveyed in the supply conveyance unit 26 are not constant, the position and orientation of bags B can be adjusted by the arrangement adjustment unit 29, and bags B having an appropriate posture can be supplied to holding units 22 positioned in the first station S1.

The specific device configuration of the arrangement adjustment unit 29 is not limited. Each arrangement adjustment unit 29 shown in the drawing has a mounting table and a relay transfer device (not shown) which transfers bags B from the supply conveyance unit 26 to the mounting table. A regulating plate is provided on the upper surface of the mounting table, and this regulating plate is disposed at a position corresponding to the outer shape of a bag B (in particular, both side edge portions and the distal side end portion), so as to surround a bag B placed on the upper surface of the mounting table from three directions and face both side edge portions and the distal side end portion of the bag B. A bag B placed on the upper surface of the mounting table by the relay transfer device is moved by a moving means, such as a friction belt, until the bag B comes into contact with a regulating plate (hereinafter also referred to as a "distal side regulating plate") provided at a position opposed to the distal side end portion. During this movement, the arrangement of the bag B in the width direction (the vertical direction of the paper surface of Fig. 6) is adjusted by the regulating plate provided at positions facing both side edge portions. Bags B whose arrangement has been adjusted in this way are taken out from the arrangement adjustment unit 29 by the delivery device 30 and are delivered to holding units 22 arranged in the first station S1.

Various changes may be added to the elements constituting the arrangement adjustment unit 29. For example, the protrusion amount of the regulating plate from the upper surface of the mounting table may be variable, and when a bag B is placed on the mounting table or when a bag B is taken out from the mounting table, the protruding amount of the regulating plates may be reduced (for example, "the protrusion amount = 0" may be possible). Further, it is possible to move a bag B on the mounting table by inclining the upper surface of the mounting table to use gravity. The illustrated arrangement adjustment units 29 are merely an example, and each arrangement adjustment unit 29 may employ another device capable of adjusting the arrangement of bags B.

### [Fourth Embodiment]

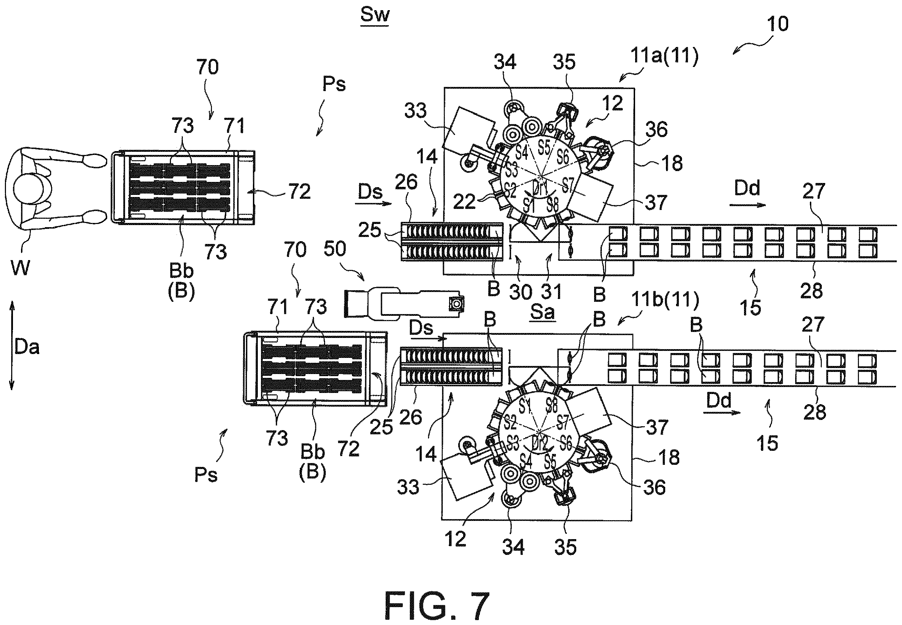

Fig. 7 is a plan view illustrating a bag processing system 10 and processing mechanisms 11 according to the fourth embodiment.

In the present embodiment, the elements which are the same as or similar to those of the above-described second embodiment are attached to the same reference numerals as those of the corresponding elements of the second embodiment, and a detailed description thereof will be omitted. A bag processing system 10 and a processing mechanism 11 according to the present embodiment can be also applied to other embodiments (for example, the above-described first and third embodiments).

The bag processing system 10 according to the present embodiment further comprises stockers 70 that hold a plurality of bags B supplied to the supply devices 14. Each stocker 70 includes a body portion 71 provided movably, housing portions 72 supported by the body portion 71, and support members 73 that supports bag bundles Bb including two or more bags B on a housing portion 72.

The illustrated body portion 71 has wheels and can move inside the work room Sw with the wheels. The movement method of the body portion 71 is not limited to this, and the wheels may not be provided. Also, while the illustrated body portion 71 is moved by the worker W, the body portion 71 is not limited to this, and the body portion 71 may be moved by another device or may have a self-propelled mechanism.

In the illustrated stocker 70, a plurality of housing portions 72 are supported in a tier manner by the body portion 71 so as to be superimposed on each other in a direction parallel to the direction of gravity. A plurality of support members 73 are provided on a housing portion 72 of each tier, and a plurality of bag bundles Bb are supported by the support members 73. Each support member 73 shown in the drawing supports a bag bundle Bb in such a manner that each bag B included in the bag bundle Bb assumes an upright posture (in particular, in such a manner that one of end portions of each bag B forming the long sides (in particular, both side edge portions) contacts the bottom surface

of a housing portion 72). However, the housing portions 72 and the support members 73 are not limited. For example, a housing portion 72 may be movably provided between a state in which the housing portion 72 does not protrude from the body portion 71 in the horizontal direction and a state in which the housing portion 72 protrudes from the body portion 71 in the horizontal direction. In addition, the support members 73 may support each bag bundle Bb in a state where one of the leading-end-side end portion and the posterior-end-side end portion (that is, end portions other than both side edge portions) of each bag bundle Bb is arranged at a relatively high position while the other is arranged at a relatively low position (in other words, in an inclined state).

In the illustrated bag processing system 10, the worker W moves stockers 70 and places the stockers 70 in the installation positions Ps assigned to the respective processing mechanisms 11. The installation positions Ps are positions in the vicinity of the supply conveyance units 26 and are positions suitable for performing the operation of supplying bags B to the supply conveyance paths 25. Since the supply conveyance paths 25 of the supply conveyance units 26 of the present embodiment extend in a direction perpendicular to the apposition direction Da, the installation positions Ps are set to positions which are located near the supply conveyance paths 25 and are distant from the supply conveyance paths 25 in a direction perpendicular to the apposition direction Da. Thus, it is possible to use the stockers 70 without enlarging the bag processing system 10 in the apposition direction Da.

In particular, the replenishment positions of bags B in the illustrated supply conveyance paths 25 (that is, the left end positions of the supply conveyance paths 25) are shifted from the flow line space Sa between the processing mechanisms 11, in a direction that is perpendicular to the apposition direction Da (in the left direction in Fig. 7). Thus, it is possible to supply bags B from stockers 70 to the supply conveyance paths 25 without causing the stockers 70 to enter into the flow line space Sa. Therefore, it is possible to determine the size of the flow line space Sa independently of the size of the stockers 70, and the interval between the processing mechanisms 11 in the apposition direction Da may be smaller than the size of the stockers 70. Specifically, the size of the stockers 70 can be determined irrespective of the size of the flow line space Sa, and the stockers 70 may be larger than the interval between the processing mechanisms 11 in the apposition direction Da.

The pickup device 50 constituted by a device such as a robot arm moves bags B (i.e., bag bundle Bb) from a stocker 70 disposed at an installation position Ps to the supply conveyance unit 26 of the corresponding supply device 14 under the control of a controller (not illustrated). The illustrated pickup device 50 grips a bag bundle Bb, takes the bag bundle Bb out of a stocker 70, and places the bag bundle Bb on the supply conveyance path 25 of a supply conveyance unit 26. The bag bundle Bb placed on the supply conveyance path 25 is sent in the supply direction Ds by a conveyance device (not shown).

In another bag processing system in which the bag conveyance line (i.e., the supply conveyance path 25 and/or the discharge conveyance path 27) protrudes from the stand 18 in the apposition direction Da, when a stocker 70 is disposed in the region between the processing mechanisms 11, the bag conveyance line can inhibit the movement of the stocker 70. Thus, it is necessary to install a mechanism which moves a stocker 70 across the bag conveyance line, or to make the interval between the processing mechanisms 11 larger than the stocker 70. In such a case, the apparatus layout may become complicated, and it may be necessary to secure a large space as the work room Sw in which the bag processing system 10 is installed. On the other hand, according to the bag processing system 10 and the processing mechanism 11 of the present embodiment, there is no need to dispose a stocker 70 in the flow line space Sa between the processing mechanisms 11, and the degree of freedom of the device layout of the bag processing system 10 is high.

The present invention is not limited to the above-described embodiments and modifications. For example, various modifications may be made to the elements of the embodiments and the modifications described above. In addition, the effects exerted by the present invention are not limited to the above-described effects, and specific effects depending on the specific configuration of each embodiment can be exerted. As described above, various additions, modifications and partial deletions can be made to each element described in the claims, description, abstract and drawings without departing from the technical idea and gist of the present invention.

## Claims

1. A bag processing system (10) comprising a plurality of processing mechanisms (11), wherein:
each of the plurality of processing mechanisms (11) includes:
a processing device (12) which sequentially conveys bags (B) to a plurality of stations (S1 to S8) including a supply station (S1), a processing station (S2 to S7) and a discharge station (S8),
a supply device (14) which conveys the bags (B) in a supply direction (Ds) and supplying the bags (B) to the supply station (S1); and
a discharge device (15) which receives the bags (B) from the discharge station (S8) and conveys the bags (B) in a discharge direction (Dd),
the supply direction (Ds) and the discharge direction (Dd) are substantially same as each other in each of two or more of the plurality of processing mechanisms (11), and
the supply directions (Ds) of the two or more of the plurality of processing mechanisms (11) are substantially same as each other and the discharge directions (Dd) of the two or more of the plurality of processing mechanisms (11) are substantially same as each other.

2. The bag processing system (10) as defined in claim 1, wherein the supply station (S1) and the discharge station (S8) are provided adjacent to each other with respect to arrangement positions of the plurality of stations (S1 to S8).

3. The bag processing system (10) as defined in claim 1 or 2, wherein the plurality of processing mechanisms (11) include:
a first type processing mechanism (11a) in which the processing device (12) conveys the bags (B) in a first rotation direction (Dr1); and
a second type processing mechanism (11b) in which the processing device (12) conveys the bags (B) in a second rotation direction (Dr2) different from the first rotation direction (Dr1) and which is provided at a position adjacent to the first type processing mechanism (11a).

4. The bag processing system (10) as defined in claim 3, wherein:
the processing device (12) of each processing mechanism (11) includes: a rotation table (21) which rotates about a rotation axis (A); and a plurality of holding units (22) which are attached to the rotation table (21) and hold the bags (B),
the supply device (14) of each processing mechanism (11) includes a supply conveyance unit (26) which conveys the bags (B) on a supply conveyance path (25) in the supply direction (Ds),
the discharge device (15) includes a discharge conveyance unit (28) which conveys the bags (B) on a discharge conveyance path (27) in the discharge direction (Dd),
a supply conveyance center line (Ls) which extends in parallel with the supply direction (Ds) and passes through a center of the supply conveyance path (25) in a whole of the supply conveyance unit (26) does not intersect with the rotation axis (A), and
a discharge conveyance center line (Ld) which extends in parallel with the discharge direction (Dd) and passes through a center of the discharge conveyance path (27) in a whole of the discharge conveyance unit (28) does not intersect with the rotation axis (A).

5. The bag processing system (10) as defined in any one of claims 1 to 3, wherein the supply device (14) of each processing mechanism (11) includes:
a supply conveyance unit (26) which conveys the bags (B) in the supply direction (Ds),
an arrangement adjustment unit (29) which adjusts arrangement of the bags (B) conveyed from the supply conveyance unit (26), and
a delivery device (30) which transfers the bags (B) of which the arrangement has been adjusted by the arrangement adjustment unit (29), to the supply station (S1).

6. The bag processing system (10) as defined in any one of claims 1 to 5, further comprising a stocker (70) which holds a plurality of bags (B) to be supplied to the supply device (14) of each processing mechanism (11), wherein the stocker (70) includes:
a body portion (71) which is provided movably,
a housing portion (72) which is supported by the body portion (71), and
a support member (73) which supports a bag bundle (Bb) including two or more bags (B) in the housing portion (72).
